# EUROPÄISCHE PATENTSCHRIFT

(11) **EP 0 803 956 B1**
(45) Veröffentlichungstag und Bekanntmachung des Hinweises auf die Patenterteilung: **27.06.2001**
(21) Anmeldenummer: 97105779.9
(22) Anmeldetag: 08.04.1997
(51) Int. Cl.: H02J 3/14

(54) **Verfahren und System zur Optimierung und Management des Verbrauches an elektrischer Energie in Industriebetrieben**
System and method for the optimisation and management of electrical energy consumption in industrial plants
Méthode et système pour l'optimisation et la gestion de la consommation électrique dans des exploitations industrielles

(30) Priorität: 22.04.1996 DE 19615959
(43) Veröffentlichungstag der Anmeldung: 29.10.1997
(73) Patentinhaber: SIEMENS AKTIENGESELLSCHAFT, 80333 München (DE)
(72) Erfinder: Weiss, Manfred, Dipl.-Ing., 91052 Erlangen (DE); Becke, Gerhart, Dipl.-Ing., 91054 Erlangen (DE)

(56) Entgegenhaltungen:
- EP-A- 0 660 486
- DE-A- 19 502 786
- US-A- 4 264 960
- US-A- 4 324 987
- US-A- 4 620 283
- US-A- 5 414 640

## Beschreibung

### Beschreibung

Verfahren und System zur Optimierung und zum Management des Verbrauches an elektrischer Energie in Industriebetrieben.

Die Erfindung bezieht sich auf ein Verfahren zur Optimierung und zum Management des Verbrauches an elektrischer Energie in Industriebetrieben gemäß dem Oberbegriff des Patentanspruches 1. Weiterhin bezieht sich die Erfindung auch auf ein System, das die Mittel zur Durchführung dieses Verfahrens aufweist.

Insbesondere bei Produktionsanlagen wird für den Betriebserfolg der Anlage eine möglichst hohe Verfügbarkeit der vorhandenen Produktionskapazität gefordert. Da die Anlagen für den Produktionsablauf durchweg elektrische Energie benötigen, wird eine verbrauchsorientierte Zuteilung der Stromkosten angestrebt.

Üblicherweise wird von Energie-Versorgungsunternehmen (EVU) die elektrische Energie für Industrieanlagen gemäß spezifischer Verträge zugeteilt, wobei sich die Stromkosten aus Arbeitspreis einerseits und Leistungspreis andererseits zusammensetzen. Der Arbeitspreis entspricht der effektiv verbrauchten Energie, während sich der Leistungspreis nach der zeitlichen Bereitstellung der elektrischen Energie aus dem Verteilernetz richtet. Vom EVU muß das Maximum der elektrischen Leistung bereitgestellt werden, auch wenn dieses möglicherweise nur selten und in kurzen Zeitintervallen verbraucht wird.

Vom Stand der Technik sind Systeme bekannt, deren Ziel es ist, sogenannte Lastspitzen zu beherrschen. Gemäß "elektrische energie technik" 33, Nr. 6 (1988), S. 16 - 18 können die Energiebezugsleistungen mit einem Rechner erfaßt und durch gezielte Zu- und/oder Abschaltung einzelner Verbraucher der Leistungsbezug vergleichsmäßigt werden.

Aus ETZ 1988, Heft 5, S. 210 bis 214 ist ein Verfahren zur Energiekostensenkung durch Energieregelung und Rundsteuertechnik bekannt, bei dem zentral unter anderem die Energiebezugsleistung analysiert wird. Insbesondere sind dafür Geräte für die Energieregelung mit Personal-Computer vorgesehen. Im einzelnen wird dort beschrieben, daß in einem Regelkreis ein Regler die gemessene Bezugsleistung erfaßt und entsprechende Stellanweisungen für das Zu- und Abschalten von Verbrauchern über die Rundsteueranlage gibt. Daneben wird mit der DE 34 26 542 C2 eine technische Lehre dahingehend angegeben, beim Verbraucher die Bezugsleistungen zu erfassen und gemäß bestimmten Vorgaben abzuschalten.

In "elektrotechnik" 73, H. 12 (1991), S. 18 bis 20 sowie in atp - Automatisierungstechnische Praxis 36 (1994), H. 11, S. 16 bis 35 werden Bussysteme mit speicherprogrammierbaren Steuerungen und übergeordneten Zentralen beschrieben. Hier ist also die Intelligenz prinzipiell auf die speicherprogrammierten Steuerungen und die Leitzentrale dezentral und zentral verteilbar. Ein unmittelbarer Bezug zum Energiemanagement besteht hier nicht. Schließlich ist aus der DE 44 34 533 A1 ein Felddaten-Digitalwandler bekannt, der vorzugsweise für den dezentralen Einsatz bei Energiemanagement- und Leitsystemen vorgesehen ist. Hier geht es im wesentlichen in den verschiedenen Ebenen die zentrale/übergeordnete Meß-Steuer- und Regelungsebene bzw. untergeordneten Aktor-Sensor-Ebenen in geeigneter Weise zu konzipieren.

Vom weiteren Stand der Technik sind Systeme zur Lastabschaltung und Wiederanschaltung bekannt, mit denen der Energieverbrauch minimiet werden soll. Beispielsweise wird in der US 4 620 283 A ein sog. Last-Controller beschrieben, bei dem ein "power bus" über einen Mikroprozessor gesteuert wird. Daneben kann entsprechend der EP 0 660 486 A mittels eines Rechners die Auswahl einzelner Lasten zum Energie- bzw. Lastmanagement ausgewählt werden. Schließlich wird in der Firmendruckschrift "Power Direction - Energiemanagement OPTIMODE" (Akt.Z. 4/93 G 46-2134 FLS/) vorgeschlagen, den Energiefluß in Anlagen zu analysieren, zu kontrollieren und zu optimieren.

Demgegenüber ist es Aufgabe der Erfindung, ausgehend vom genannten Stand der Technik das Verfahren der eingangs genannten Art zu verbessern und ein zugehöriges System bereitzustellen.

Die Aufgabe ist erfindungsgemäß durch das Verfahren gemäß Patentanspruch 1 gelöst. Ein zugehöriges System mit Mitteln zur Durchführung des Verfahrens ist durch Patentanspruch 11 gekennzeichnet. Weiterbildungen des Verfahrens bzw. des zugehörigen Systems sind in den jeweils abhängigen Ansprüchen angegeben.

Bei der Erfindung wird die jeweilige Energiebezugsleistung dezentral analysiert und werden anhand von dezentralen Berechnungen zentral geeignete Verbraucher ausgewählt, die in prozeßtechnisch vorbestimmtem Zusammenhang mit einem vorgegebenen Betriebsablauf, insb. Produktionsablauf, ein- bzw. ausgeschaltet werden können. Durch Verwendung einer Prioritätenliste für die Verbraucher läßt sich dabei der prozeßtechnisch sinnvolle Zusammenhang mit dem Betriebsablauf, insbes. Produktionsablauf, erreichen. Vorteilhafterweise wird die Bezugsleistungskurve optimiert und das optimale Bezugsleistungslimit bzw. -maximum bestimmt, deren Einhaltung durchgehend überwachbar ist. Somit ist ein intelligentes Energiemanagement möglich, bei dem einerseits ein festgelegtes Limit nicht überschritten wird, aber andererseits das Maximum voll ausgeschöpft werden kann.

Das zugehörige System ist durch einen dezentralen, modularen und offenen Systemaufbau mit wenigstens einer standardisierten speicherprogrammierbaren Steuerung zur dezentralen Analyse der Energiebezugsleistung einen marktüblichen Personal-computer zur zentralen Auswahl geeigneter Verbraucher und zur Visualisierung sowie mit wenigstens einem Bussystem zur Datenkommunikation und zum Anschluß intelligenter Sensoren und Schalter gekennzeichnet. Wesentlich ist dabei, daß bei entsprechender Datenkommunikation die Berechnungen dezentral in den SPS'en erfolgen können.

Für die erfindungsgemäße Lösung sind offene Bussysteme zur Datenkommunikation geeignet, wobei vorzugsweise standardisierte Bussysteme zum Datentransfer von bzw. zu jedem einzelnen Anlagensignal vorhanden sind. Insbesondere wird als übergeordnetes Bussystem der sogenannte PROFI-Bus und als untergeordnetes Bussystem der sogenannte AS-I-Bus verwendet.

Mit der Erfindung kann erreicht werden, daß zwar Lastschwankungen innerhalb einer Meßperiode - bei den EVU's üblicherweise 15 min - erfolgen dürfen; der Mittelwert überschreitet aber niemals das gesetzte Limit. Durch die entsprechenden Messungen wird der Grenzwert so rechtzeitig angezeigt, daß über automatische Schalt- und Steuerungsvorgänge synchron mit dem 1/4-Stundentakt des EVU's der Verbrauch entsprechend beeinflußt wird. Durch die Kombination wenigstens einer speicherprogrammierbaren Steuerung (SPS), wenigstens einer Schaltanlage aus wenigstens einem Leistungsschalter und einem offenen Bedien- und Beobachtungssystem kann nicht nur der Energieverbrauch in optimaler Weise gesteuert werden, sondern ist darüber hinaus auch eine voll-kommunikationsfähige Gesamtanlage geschaffen. Insbesondere bei Industriebetrieben mit mehreren Produktionsanlagen bietet ein solches Energieerfassungs- und Steuerungssystem auch die Möglichkeit der Produktionsplanung.

Ausführungsbeispiele der Erfindung werden anhand der Zeichnung näher erläutert. Es zeigen
- FIG 1: eine graphische Darstellung zur Verdeutlichung des Arbeitspreises einerseits und des Leistungspreises andererseits bei Produktionsanlagen mit elektrischem Verbrauch,
- FIG 2: ein System mit wenigstens einer zentralen SPS zur Bezugserfassung und wenigstens einer dezentralen SPS zur Verbrauchserfassung zur Steuerung nach dem Master-Slave-Prinzip,
- FIG 3: die Funktionen des in FIG 2 vorhandenen PC zur Visualisierung der Daten,
- FIG 4: die möglichen Bezugsstrukturen beim PC gemäß FIG 2,
- FIG 5: und FIG 6 graphische Darstellungen zur Statistikauswertung,
- FIG 7: die Energieflüsse bei einer Industrieanlage mit einzelnen Produktionsanlagen als elektrische Verbraucher und
- FIG 8: einen zugehörigen Systemaufbau.

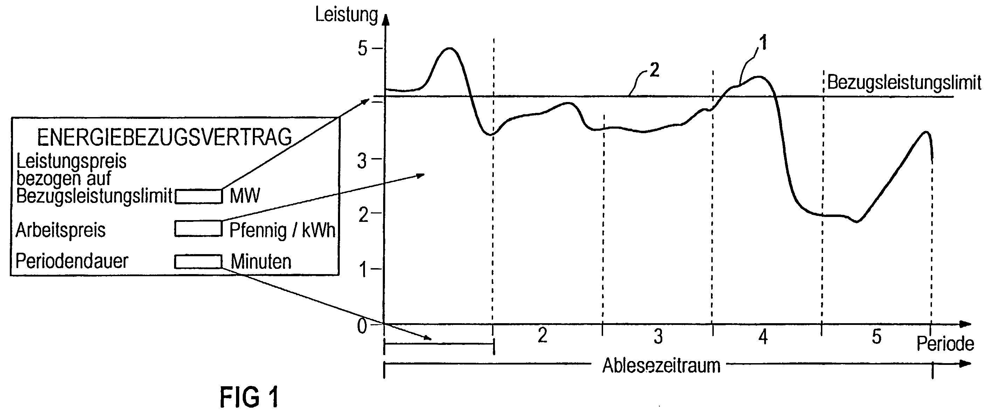

Im Diagramm gemäß FIG 1 ist die von einem Industrieunternehmen für eine Produktionsanlage benötigte elektrische Leistung als Funktion der Zeit aufgetragen. Es ergibt sich im allgemeinen ein Graph 1 mit Schwankungen, welche die tatsächlich benötigte Leistung wiedergeben. Eingetragen ist weiterhin das sogenannte Bezugsleistungslimit 2, das durch den jeweils vorliegenden Vertrag mit dem EVU definiert ist.

Die elektrische Energie wird üblicherweise vom Kunden über einen Arbeitspreis einerseits, mit dem die verbrauchte Energiemenge bezahlt wird, und über einen Leistungspreis andererseits, mit dem die zeitliche Leistungsbereitstellung vergütet wird, berechnet. Dafür ist insbesondere der sogenannte Maximumtarif maßgebend. Letzteres Maximum entspricht der höchsten mittleren Leistung, die ein Kunde vom EVU innerhalb eines Ablesezeitraums bezogen hat. Randbedingung für eine Optimierungsregelung für den elektrischen Energieverbrauch ist, unter dem Maximum zu bleiben, um die Gefahr von Überschreitungen zu vermeiden.

Für die Optimierung des Energieverbrauches ist es für den einzelnen Verbraucher wesentlich, ein optimales Maximum herauszufinden. Dazu erfolgt eine Messung der Gesamtbezugsleistung, woraus sich die Kurve 1 in FIG 1 mit Spitzen und Tälern ergibt. Ziel aller Energiemanagementverfahren ist es nun, die Spitzen und Täler in der Kurve 1 gemäß FIG 1 nach Möglichkeit zu beseitigen.

Zu letzterem Ziel ist wesentlich die Suche nach Verbrauchern in der Produktionsanlage, die geeignet sind, Schwankungen im Leistungsbezug aufzufangen. Geeignet sind sie dann, wenn sie ohne den Produktionsablauf negativ beeinflussen bei Bedarf zu- und abgeschaltet werden können. Dafür werden die Verbraucher üblicherweise in eine Prioritätenliste eingeordnet. Eine solche Liste koordiniert die Verbraucher, indem sie ihnen unter prozeßtechnischen Gesichtspunkten einen bestimmten Rang zuordnet.

Um die Gesamtbezugsleistungskurve beurteilen zu können, muß weiterhin der Energiefluß der Verteilung in eine Anlage analysiert werden. Dadurch wird eine Transparenz der Energiebedarfsstruktur der Anlage erreicht, welche erst erlaubt, gezielte Eingriffe vorzunehmen. Dazu werden die Leistungen erfaßt, die von einzelnen Verteilungen und/oder Verbrauchern der Gesamtanlage bezogen werden.

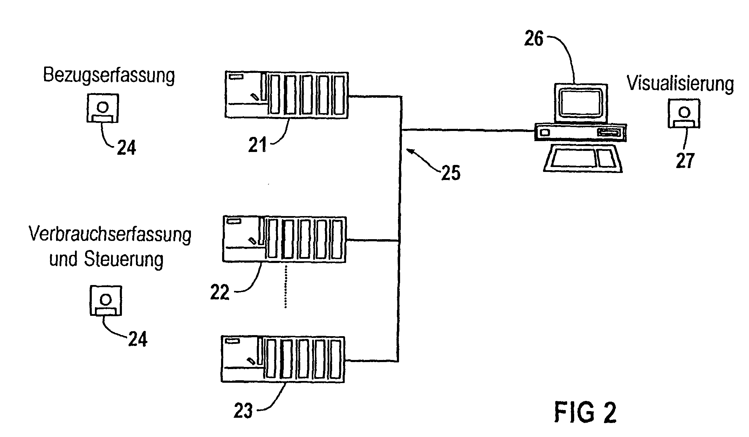

In FIG 2 ist eine erste SPS 21 vorhanden, die der Bezugserfassung der Leistung dient. Weiterhin sind SPS'en 22 und 23 vorhanden, die der Verbrauchserfassung und den notwendigen Steuerungen dienen. Dabei ist die notwendige Software jeweils durch Einheiten 24 angedeutet. Die SPS'en 21, 22 und 23 arbeiten nach dem bekannten Master-Slave-Prinzip und sind über Datenkommunikationsleitungen 25, beispielsweise ein Industrie-Bussystem, miteinander verbunden. Zur Visualisierung ist ein Personalcomputer mit Software vorhanden. Beispielsweise wird mit einem Standard-Betriebssystem, wie WINDOWS NT oder WINDOWS 95, gearbeitet.

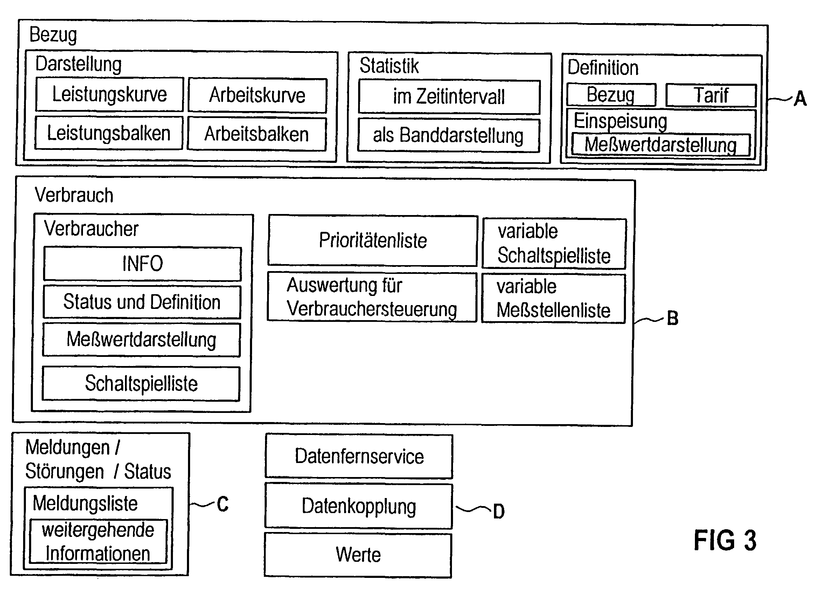

Der PC 26 dient zur Visualisierung und Auswertung der Daten und deren Archivierung. Weiterhin sind ihm allgemeine Parametrierungsaufgaben zugeordnet. Eine Übersicht über die konkreten Funktionen des PC 26 in FIG 2 ergibt sich aus der Protokoll-Darstellung gemäß FIG 3. Im einzelnen bedeuten die Blöcke A, B, C und D jeweils Einzelfunktionen, die separat oder kombiniert darstell- bzw. abrufbar sind.

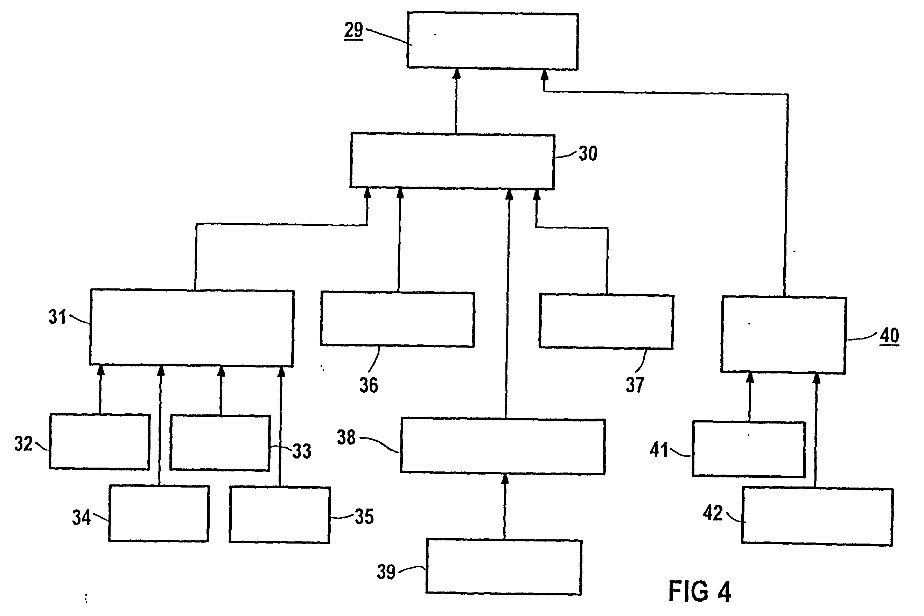

In FIG 4 sind die Bezugsfunktionen bei der Visualisierung am PC 26 der FIG 2 wiedergegeben. Damit ist ein Strukturplan für die verwendete Software angegeben. Die einzelnen Programmblöcke können einmal oder auch 1- bis n-mal vorhanden sein. Im einzelnen bedeuten Block 29 den Bezug, der von Block 30 entsprechend dem Bezugsvertrag und Block 40 entsprechend einer Statistikauswertung beeinflußt wird. Der Bezugsvertrag entsprechend Block 30 wird von den Blöcken 31 mit der Bezugsleistungs- bzw. Bezugsarbeitsdarstellung, dem Block 36 mit der Bezugsdefinition, dem Block 37 der Tarifdefinition und dem Block 38 mit der Einspeisungsdefinition beeinflußt. Auf den Block 31 wirken Block 32 mit der Leistungskurve, Block 33 mit der Arbeitskurve, Block 34 mit Leistungsbalken und Block 35 mit Arbeitsbalken ein. Die Einspeisungsdefinition gemäß Block 38 wird von der Meßwertdarstellung beeinflußt. Schließlich ist für die Statistikauswertung entsprechend Block 40 Block 41 mit dem Zeitintervall und/oder Block 42 mit der Banddarstellung von Bedeutung.

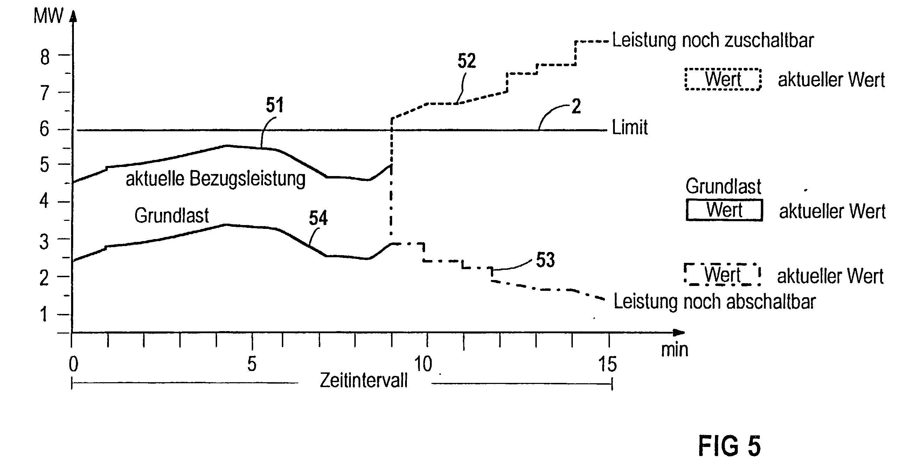

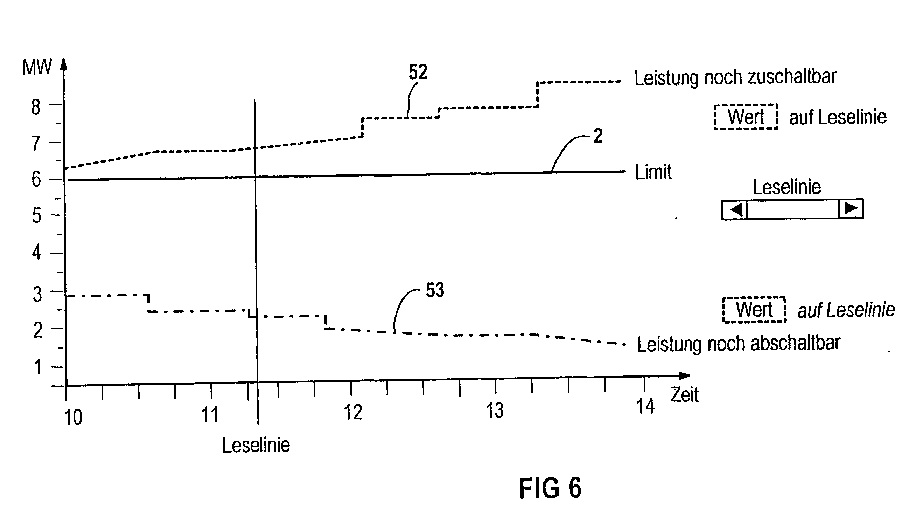

Die Vorteile der Statistikauswertung gemäß Programmblock 40 der FIG 4 gibt sich im einzelnen anhand der FIG 5 und FIG 6. Die Statistikauswertung ist als Leistungsdiagramm aufgeführt. Unter der Restriktion einer minimalen Laufzeit und minimalen Stillstandszeit wird errechnet, wieviel Leistung innerhalb des Zeitintervalles noch abgeschaltet bzw. zugeschaltet und wieviel Leistung über das Zeitintervall hinaus noch abgeschaltet bzw. zugeschaltet werden kann.

In den Leistungsdiagrammen gemäß FIG 5 und 6 bedeuten die horizontale Linie 2 das Bezugsleistungslimit gemäß FIG 1, der Graph 51 die aktuelle Bezugsleistung, der Graph 52 die noch zuschaltbare Leistung und der Graph 53 die noch abschaltbare Leistung. Der Graph 54 stellt die Grundlast dar, die über das Programm nicht beeinflußbar ist.

Speziell in FIG 6 ist die noch zuschaltbare Leistung entsprechend Graph 52 und die noch abschaltbare Leistung entsprechend Graph 53 auf das Limit gemäß Linie 2 bezogen. Die Fläche zwischen diesen beiden Graphen stellt den Steuerungs-bzw. Regelbereich der Energiebezugsüberwachung dar.

Die Grundlast 54 errechnet sich in FIG 5 aus dem aktuellen Bezugswert abzüglich der Leistung aller schaltbaren Verbrauchergruppen sowie abzüglich der aktuellen Leistung der regelbaren Verbraucher. Wie erwähnt, ist die Grundlast selbst nicht beeinflußbar.

Bei obiger Analyse ist das optimale Maximum definiert und als Bezugsleistungslimit festgesetzt. Diese Grenze wird nicht überschritten und wird periodenbezogen überwacht. Innerhalb der Periode wird zyklisch der Mittelwert der tatsächlich bezogenen Leistung erfaßt und permanent mit dem Bezugszeichenlimit verglichen. Steigt der Wert zu hoch, werden die in der Analyse vorgesehenen Verbraucher entsprechend ihrer Position in der Prioritätenliste abgeschaltet. Zeigt die Periodenüberwachung hingegen, daß das Energiekontingent noch einen Rest an Leistung bereithält, existiert die Möglichkeit, bei Bedarf geeignete Verbraucher einzuschalten. Die Steuerung koordiniert die Schaltprozesse ebenfalls mit Hilfe einer Prioritätenliste.

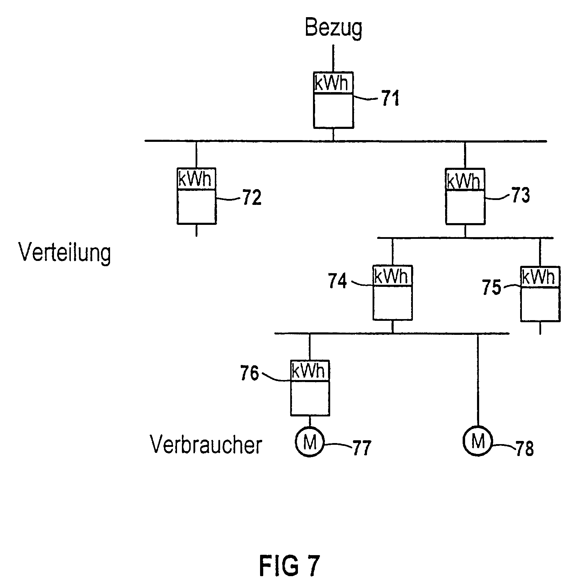

Aus FIG 7 werden die Energieflüsse transparent. Dem Bezug nachgeschaltet sind in verschiedenen Ebenen einzelne Leistungszähler 71 bis 76. Aus den verschiedenen Ebenen wird die Verteilung deutlich, wobei intelligente Zähleinheiten vorhanden sein können. Nachgeschaltet sind Verbraucher 77 und 78.

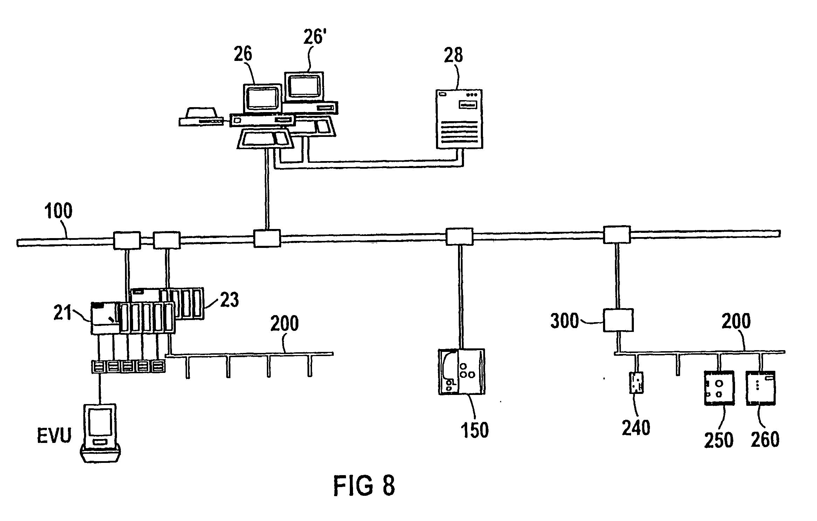

Zur Durchführung des beschriebenen Verfahrens ist ein System notwendig, das eine Bezugserfassung, eine Verbrauchersteuerung, eine Schaltspielliste, eine Verteilungsmessung, eine Verbrauchermessung und gegebenenfalls eine Kostenstellenzuordnung beinhaltet. Dazu ist gemäß FIG 8 ein offener, modularer und dezentraler Systemaufbau gewählt. Wesentlich ist dabei, daß der Datenaustausch über standardisierte Schnittstellen erfolgt, daß das System bedarfsabhängig anpaßbar ist und daß die Einzelelemente des Systems durch normierte Busse miteinander verbunden sind.

In FIG 8 sind die anhand FIG 2 bereits erläuterten SPS'en 21 bis 23, die in beschriebener Weise zur Bezugserfassung sowie Verbraucherfassung und Steuerung der vom nicht näher bezeichneten EVU gelieferten elektrischen Leistung dienen, und der PC 26 zur Visualisierung vorhanden. Letzterer ist beispielsweise mit weiteren PC's 26' mit einem Server 28 verbunden, wofür bekanntermaßen ein sogenanntes Ethernet-System verwendet wird. Daneben bedeuten Bezugszeichen 100 den sog. PROFI-Bus (Prozess-Field-Bus) als übergeordnetes Bussystem und Bezugszeichen 200 den sogenannten AS-I-Bus (Actuator Sensor Interface) als untergeordnetes Bussystem. Beispielsweise ist ein erster intelligenter Leistungsschalter 150 unmittelbar an den PROFI-Bus 100 angeschaltet und sind Sensoren 100 sowie weitere Leistungsschalter 250 und/oder Lasttrenner 260 an den AS-I-Bus 200 angeschaltet. Durch Anschaltung des AS-I-Bus 200 über geeignete Wandler 300 an den PROFI-Bus 100 ergibt sich eine vollständige Kompatibilität der unterschiedlichen Bussysteme.

Durch das als bekannter PROFI-Bus genormte Bussystem 100 lassen sich Betriebszustände und Parametereinstellungen übertragen, insbesondere Meldeinformationen des intelligenten Leistungsschalters 150 zur Steuerung der SPS 21. Das unterlagerte AS-Interface als zweites Bussystem 200 ermöglicht anwendungsspezifisch Sensoren 240, Leistungsschalter 250 und Lasttrenner 260 zu erfassen. Damit bekommen der Sensor 240, der Leistungsschalter 250 und dem Lasttrenner 260 mit elektronischer Sicherungsüberwachung den Eingang in den Kommunikationsverbund.

Mit dem PROFI-Bus 100 und dem AS-I-Bus 200 ist somit also eine vollkommunikationsfähige Niederspannungsschaltanlage geschaffen, bei der beispielsweise Zählgeräte, Schaltgeräte und Befehlsgeräte mit intelligenten Schnittstellen in das System integriert sind.

Beim anhand FIG 8 beschriebenen System können insbesondere Daten des intelligenten Leistungsschalters 150 umfassend dargestellt werden, beispielsweise der durchschnittliche Stromverbrauch, der Betriebszustand des Leistungsschalters, die Anzahl der Warnmeldungen, eine Übertemperaturwarnung, Phasensymmetrie oder Auslöseursache mit Zeit und Anzahl der Auslösungen. Insbesondere letztere können über mehrere Schichten hinweg eindeutigen Aufschluß über Störstellen geben und so dazu beitragen, diese möglichst schnell zu beseitigen.

Lastaufnahme und Lastabwurf sind im Überstromauslöser des Leistungsschalters bereits integrierte Steuerfunktionen, die entsprechend ausgewertet sogenannte Fitneßzahlen für den beschreibenden Prozeß ergeben.

Mit System gemäß FIG 8 können bei einem ausgelösten Leistungsschalter im Verbund mit weiteren Schaltgeräten die zugehörigen Störstellen ausfindig gemacht werden. Somit ist ein effizientes Energieverbrauchsmanagement geschaffen.

Speziell bei Produktionsanlagen ist durch das Energieverbrauchsmanagement auch eine effektive Produktplanung möglich. Die Bearbeitungszeit eines Produktes kann sich über einen längeren Zeitraum erstrecken. In diesem Zeitraum kann die Bearbeitung des Produktes nicht einfach ohne Qualitätseinbußen unterbrochen werden. Aus diesen beiden Vorgaben ist es sinnvoll, die Bearbeitung von Produkten verschachtelt so zu steuern, daß der benötigte Energiebedarf über den Tag annähernd gleichbleibend ist.

Mit der Festlegung, ein Produkt zu produzieren, ist gleichzeitig eine Vorgabe über den Energiebezug gefallen. Je mehr Produkte in der Produktion sind, um so weniger Möglichkeiten bestehen, die Bezugsenergie frei zu bestimmen, bzw. auf den Energiebezug Einfluß zu nehmen. Eine Eingriffsmöglichkeit besteht nur noch in der Summe der Regelbereiche pro Produkt, wobei das beschriebene System vorteilhaft eingesetzt werden kann.

## Patentansprüche

1. Verfahren zur Optimierung und zum Management des Verbrauches von elektrischer Energie in Industriebetrieben, insbes. Produktionsbetrieben,
- wobei für einen Betriebsablauf, insb. Produktionsablauf, eine Gesamtbezugsleistung als Energie pro Zeiteinheit einerseits
- und verbraucherspezifische Bezugsleistungen andererseits gemessen werden
- und daraus die Zu- und/oder Abschaltung einzelner Verbraucher während des Betriebsablaufes, insb. Produktionsablauf, bestimmt wird,
**dadurch gekennzeichnet,**
- daß die jeweilige Energiebezugsleistung dezentral analysiert wird und
- daß anhand von dezentralen Berechnungen zentral geeignete Verbraucher ausgewählt werden, die in prozeßtechnisch vorbestimmtem Zusammenhang mit dem Betriebsablauf, insb. Produktionsablauf, ein- bzw. ausgeschaltet werden können.

2. Verfahren nach Anspruch 1, **dadurch gekennzeichnet,** daß eine Prioritätenliste für die Verbraucher verwendet wird.

3. Verfahren nach Anspruch 2, **dadurch gekennzeichnet,** daß Prioritätenliste zur Koordinierung der prozeßtechnisch geeigneten Verbraucher verwendet wird.

4. Verfahren nach Anspruch 1, **dadurch gekennzeichnet,** daß die Bezugsleistungskurve optimiert und das optimale Bezugsleistungs-Limit bzw. -Maximum bestimmt wird.

5. Verfahren nach Anspruch 4, **dadurch gekennzeichnet,** daß die Einhaltung des optimalen Bezugsleistungs-Limits bzw. -Maximums durchgehend überwacht wird.

6. Verfahren nach Anspruch 4, **dadurch gekennzeichnet,** daß die Bezugsleistungen statistisch erfaßt und ausgewertet werden.

7. Verfahren nach Anspruch 3, **dadurch gekennzeichnet,** daß die prozeßtechnisch geeigneten Verbraucher in der Rangfolge der Prioritätenliste geschaltet werden.

8. Verfahren nach Anspruch 1, **dadurch gekennzeichnet,** daß die Verbraucher über steuerbare Schalter an- bzw. abgeschaltet werden.

9. Verfahren nach Anspruch 8, **dadurch gekennzeichnet,** daß eine dezentrale Datenkommunikation erfolgt.

10. Verfahren nach Anspruch 9, **dadurch gekennzeichnet,** daß die Daten über vorhandene Kommunikationsnetze ausgetauscht werden.

11. System mit Mitteln zur Optimierung und zum Management des Verbrauches von elektrischer Energie in Industriebetrieben, insbes. Produktionsbetrieben,
- wobei für einen Betriebsablauf, insb. Produktionsablauf, eine Gesamtbezugsleistung als Energie pro Zeiteinheit einerseits
- und verbraucherspezifische Bezugsleistungen andererseits gemessen werden
- und daraus die Zu- und/oder Abschaltung einzelner Verbraucher während des Betriebsablaufes, insb. Produktionsablaufes, bestimmt wird, gekennzeichnet dadurch, daß
- die jeweilige Energiebezugsleistung dezentral analysiert wird und anhand von dezentralen Berechnungen zentral geeignete Verbraucher ausgewählt werden, die in prozeßtechnisch vorbestimmtem Zusammenhang mit dem Betriebsablauf, insb. Produktionsablauf, ein- bzw. ausgeschaltet werden können, und durch einen dezentralen, modularen und offenen Systemaufbau mit wenigstens einer standardisierten speicherprogrammierbaren Steuerung (21, 22, 23) zur dezentralen Analyse der Energiebezugsleistung, einem marktüblichen Personalcomputer (26, 26') zur zentralen Auswahl geeigneter Verbraucher und zur Visualisierung sowie mit wenigstens einem Bussystem (100, 200) zur Datenkommunikation und zum Anschluß von sensoren intelligenten und Schaltern (150, 250, 260).

12. System nach Anspruch 11, **dadurch gekennzeichnet,** daß standardisierte Bussysteme (100, 200) vorhanden sind zum Datentransfer von bzw. zu jedem einzelnen Anlagensignal.

13. System nach Anspruch 12, **dadurch gekennzeichnet,** daß als übergeordnetes Bussystem (100) der sog. PROFI-Bus und als untergeordnetes Bussystem (200) der sog. AS-I-Bus verwendet ist.

14. System nach Anspruch 13, **dadurch gekennzeichnet,** daß an das übergeordnete Bussystem (100) entsprechend ausgebildete intelligente Leistungsschalter (150) direkt angeschaltet sind.

15. System nach Anspruch 14, **dadurch gekennzeichnet,** daß an das untergeordnete Bussystem (200) geeignete intelligente Schalter (250, 260) angeschaltet sind.

16. System nach Anspruch 14, **dadurch gekennzeichnet,** daß das untergeordnete Bussystem (200) über Wandler (300) an das übergeordnete Bussystem (100) angeschaltet ist.

17. System nach einem der Ansprüche 11 bis 17, **dadurch gekennzeichnet,** daß die verwendete Software mit Standardbetriebssystemen, insbesondere WINDOWS NT oder WINDOWS 95, arbeitet.

18. System nach einem der Ansprüche 11 bis 17, **dadurch gekennzeichnet**, daß die Software auf SQL-fähige Datenbanken, insbesondere ACCESS, aufbaut.

19. System nach einem der Ansprüche 11 bis 17, **dadurch gekennzeichnet**, daß die Software mit der normierten, modularen und objektorientierten STEP-7-Sprache arbeitet.

## Claims

1. Method for the optimisation and management of the consumption of electrical energy in industrial plants, in particular production plants,
- wherein, for an industrial process, in particular production process, a total power demand as energy per unit of time on the one hand
- and load-specific power demands on the other hand are measured
- and from this, the connection and/or disconnection of individual loads during the industrial process, in particular production process, is determined,
characterised
- in that the respective energy power demand is analysed in a decentralised manner, and
- in that with the aid of decentralised calculations, suitable loads are selected centrally, which loads can be switched on or off in connection, predetermined in terms of process engineering, with the industrial process, in particular production process.

2. Method according to claim 1, characterised in that a priority list for the loads is used.

3. Method according to claim 2, characterised in that a priority list for coordinating the loads which are suitable in terms of processing engineering is used.

4. Method according to claim 1, characterised in that the power-demand curve is optimised and the optimal power-demand limit or maximum is determined.

5. Method according to claim 4, characterised in that the observance of the optimal power-demand limit or maximum is monitored constantly.

6. Method according to claim 4, characterised in that the power demands are statistically detected and evaluated.

7. Method according to claim 3, characterised in that the loads which are suitable in terms of process engineering are connected in the order of the priority list.

8. Method according to claim 1, characterised in that the loads are connected or disconnected by way of controllable switches.

9. Method according to claim 8, characterised in that a decentralised data communication takes place.

10. Method according to claim 9, characterised in that the data are exchanged via existing communication networks.

11. System with means for the optimisation and management of the consumption of electrical energy in industrial plants, in particular production plants,
- wherein, for an industrial process, in particular production process, a total power demand as energy per unit of time on the one hand
- and load-specific power demands on the other hand are measured
- and from this, the connection and/or disconnection of individual loads during the industrial process, in particular production process, is determined
characterised in that
- the respective energy power demand is analysed in a decentralised manner, and
- with the aid of decentralised calculations, suitable loads are selected centrally, which loads can be switched on or off in connection, predetermined in terms of process engineering, with the industrial process, in particular production process, and by a decentralised, modular and open system structure with at least one standardised programmable controller (21, 22, 23) for decentralised analysis of the energy power demand, a customary personal computer (26, 26') for central selection of suitable loads and for the visual display, and also with at least one bus system (100, 200) for data communication and for the connection of intelligent sensors and switches (150, 250, 260).

12. System according to claim 11, characterised in that there are standardised bus systems (100, 200) for data transfer from and to each individual plant signal.

13. System according to claim 12, characterised in that the so-called PROFI bus is used as the master bus system (100) and the so-called AS-I bus is used as the subordinate bus system (200).

14. System according to claim 13, characterised in that correspondingly constructed intelligent circuit-breakers (150) are connected directly to the master bus system (100).

15. System according to claim 14, characterised in that suitable intelligent switches (250, 260) are connected to the subordinate bus system (200).

16. System according to claim 14, characterised in that the subordinate bus system (200) is connected to the master bus system (100) by way of converters (300).

17. System according to one of claims 11 to 17, characterised in that the software which is used works with standard operating systems, in particular WINDOWS NT or WINDOWS 95.

18. System according to one of claims 11 to 17, characterised in that the software is based on SQL-capable databases, in particular ACCESS.

19. System according to one of claims 11 to 17, characterised in that the software works with the standardised, modular and object-oriented STEP-7 language.

## Revendications

1. Procédé pour l'optimisation et la gestion de la consommation d'énergie électrique dans des exploitations industrielles, notamment dans des exploitations industrielles de production,
- dans lequel, pour un déroulement d'exploitation, notamment pour un déroulement de production, on mesure une puissance totale mise à disposition comme énergie par unité de temps d'une part
- et des puissances mises à disposition spécifiques aux consommateurs d'autre part
- et on détermine à partir de là le branchement et/ou le débranchement de consommateurs individuels pendant le déroulement d'exploitation, notamment pendant le déroulement de production,
caractérisé par le fait
- que l'on analyse de façon décentralisée la puissance énergétique mise à disposition respective et
- que, à l'aide de calculs décentralisés, on sélectionne de façon centralisée des consommateurs appropriés qui peuvent être branchés ou débranchés dans une relation prédéterminée, du point de vue du processus technique, avec le déroulement d'exploitation, notamment avec le déroulement de production.

2. Procédé selon la revendication 1, caractérisé par le fait que l'on utilise une liste de priorités pour les consommateurs.

3. Procédé selon la revendication 2, caractérisé par le fait que l'on utilise une liste de priorités pour coordonner les consommateurs appropriés du point de vue du processus technique.

4. Procédé selon la revendication 1, caractérisé par le fait que l'on optimise la courbe de puissance mise à disposition et que l'on détermine la limite optimale, ou le maximum optimal, de puissance mise à disposition.

5. Procédé selon la revendication 4, caractérisé par le fait que l'on contrôle en continu le respect de la limite optimale, ou du maximum optimal, de puissance mise à disposition.

6. Procédé selon la revendication 4, caractérisé par le fait que l'on détecte et évalue statistiquement les puissances mises à disposition.

7. Procédé selon la revendication 3, caractérisé par le fait que l'on commute les consommateurs appropriés, du point de vue du processus technique, dans l'ordre donné par la liste de priorités.

8. Procédé selon la revendication 1, caractérisé par le fait que l'on branche ou débranche les consommateurs par l'intermédiaire d'interrupteurs commandables.

9. Procédé selon la revendication 8, caractérisé par le fait qu'il s'effectue une communication de données décentralisée.

10. Procédé selon la revendication 9, caractérisé par le fait que les données sont échangées par l'intermédiaire de réseaux de communication existants.

11. Système comportant des moyens pour l'optimisation et la gestion de la consommation d'énergie électrique dans des exploitations industrielles, notamment dans des exploitations industrielles de production,
- dans lequel, pour un déroulement d'exploitation, notamment pour un déroulement de production, une puissance totale mise à disposition comme énergie par unité de temps est mesurée d'une part
- et des puissances mises à disposition spécifiques aux consommateurs sont mesurées d'autre part
- et le branchement et/ou le débranchement de consommateurs individuels pendant le déroulement d'exploitation, notamment pendant le déroulement de production, sont déterminés à partir de là,
caractérisé par le fait que
- la puissance énergétique mise à disposition respective est analysée de façon décentralisée, et
- à l'aide de calculs décentralisés, il est sélectionné de façon centralisée des consommateurs appropriés qui peuvent être branchés ou débranchés dans une relation prédéterminée, du point de vue du processus technique, avec le déroulement d'exploitation, notamment avec le déroulement de production,
et par une structure de système décentralisée, modulaire et ouverte comportant au moins une commande programmable en mémoire standardisée (21, 22, 23) destinée à l'analyse décentralisée de la puissance énergétique mise à disposition, un ordinateur personnel usuel (26, 26') destiné à la sélection centralisée de consommateurs appropriés et à la visualisation ainsi qu'au moins un système de bus (100, 200) destiné à la communication de données et au raccordement de capteurs et d'interrupteurs intelligents (150, 250, 260).

12. Système selon la revendication 11, caractérisé par le fait qu'il y a des systèmes de bus standardisés (100, 200) pour le transfert de données de ou vers chaque signal d'installation individuel.

13. Système selon la revendication 12, caractérisé par le fait que le bus dit PROFI est utilisé comme système de bus supérieur (100) et que le bus dit AS-I est utilisé comme système de bus subordonné (200).

14. Système selon la revendication 13, caractérisé par le fait que des interrupteurs de puissance intelligents (150), conçus en conséquence, sont raccordés directement au système de bus supérieur (100).

15. Système selon la revendication 14, caractérisé par le fait que des interrupteurs intelligents appropriés (250, 260) sont raccordés au système de bus subordonné (200).

16. Système selon la revendication 14, caractérisé par le fait que le système de bus subordonné (200) est branché sur le système de bus supérieur (100) par l'intermédiaire de convertisseurs (300).

17. Système selon l'une des revendications 11 à 17, caractérisé par le fait que le logiciel utilisé travaille avec des systèmes d'exploitation standards, en particulier WINDOWS NT ou WINDOWS 95.

18. Système selon l'une des revendications 11 à 17, caractérisé par le fait que le logiciel est construit sur des bases de données compatibles SQL, en particulier ACCESS.

19. Système selon l'une des revendications 11 à 17, caractérisé par le fait que le logiciel travaille avec le langage STEP 7 normalisé, modulaire et orienté objet.
